# EUROPEAN PATENT SPECIFICATION

(11) **EP 3 181 801 B1**
(45) Date of publication and mention of the grant of the patent: **09.02.2022**
(21) Application number: 16202473.1
(22) Date of filing: 06.12.2016
(51) Int. Cl.: E06B 11/08

(54) **ACCESS MANAGEMENT SYSTEM TO A VEHICLE FOR THE PUBLIC TRANSPORT OF PERSONS, AND RELATED VEHICLE**
ZUGANGSMANAGEMENTSYSTEM ZU EINEM FAHRZEUG FÜR DEN ÖFFENTLICHEN TRANSPORT VON PERSONEN UND ENTSPRECHENDES FAHRZEUG
SYSTÈME DE GESTION D'ACCÈS À UN VÉHICULE POUR LE TRANSPORT PUBLIC DE PERSONNES ET VÉHICULE ASSOCIÉ

(30) Priority: 18.12.2015 IT UB20159257
(43) Date of publication of application: 21.06.2017
(73) Proprietor: Saima SPA, 52100 Arezzo (IT)
(72) Inventor: RINALDI, Rinaldo, 52100 Arezzo (IT)
(74) Representative: Tirloni, Bartolomeo

(56) References cited:
- EP-A1- 2 278 554
- EP-A2- 1 990 777
- CA-A1- 2 282 036
- FR-A1- 3 019 581

## Description

The present invention discloses an access management system for a vehicle for the public transport of persons, and a related vehicle.

A main problem perceived by both the community and the public transport companies, it is the evasion of the payment of the ticket by a percentage of users of a public transport service.

Management or control systems of access to a vehicle of public transport are known, which are able to deter and/or to prevent the users without a valid travel ticket from accessing to a public transport vehicle.

The patent application EP 2,278,554 A1 discloses an access management system to a vehicle for public transport of persons, the system comprising an obstruction device suitable to operate between a configuration of obstruction of the transit passageway, and a configuration of clearance of passageway for the transit through it by the user, and an electronic unit for operating and controlling the system, which is interfaceable with a validation machine of travel tickets for receiving from the validation machine a validation signal and configured for operating, through a command signal which is function of the validation signal, the obstruction device selectively between the two configurations of obstruction and clearance which are corresponding respectively with an authorized and unauthorized passage through the transit passageway. The obstruction device can comprise a couple of physical barriers arranged symmetrically at opposite sides of the transit passageway.

FR3019581A1 discloses a barrier for the controlled access, in particular for public transport, public establishments and the like.

The Applicant considered that the known access management system to a vehicle for the public transport are not devoid of drawbacks and/or can be improved in one or more aspects.

For example the Applicant considers that in general the physical barriers used for obstructing the transit passageway are excessively bulky and/or heavy. This, according to the Applicant, causes many downsides.

For example the physical barriers disclosed with reference to figures 2 and 3 of the aforementioned EP 2,278,554 A1, having a vertical wing configuration, are too heavy and moreover they are difficult to move with a rotation on the vertical plane (namely with axis of rotation along the transit direction of the passengers).

According with the Applicant even the physical barriers shaped as a horizontal bar, as disclosed with reference to figure 4 of EP 2,278,554 A1, are in practice not satisfying. Indeed the Applicant has observed that such bars, when they are rotated in a horizontal plane (namely around a vertical axis of rotation), during their movement they span a very wide area, which has to be kept constantly free from objects and persons.

Furthermore, in an open position, the obstruction of the bars along the transit direction makes the access to possible seats near the bars impossible or difficult in the open position.

Furthermore, the Applicant, after several tests performed in real operating conditions both on a physical barrier with a single horizontal bar and a physical barrier with two horizontal bars with horizontal rotation and with length between 300m and 500mm each, according to the teaching of EP 2,278,554 A1 (particularly figure 4), realized that they cause much annoyance to the users, insofar the free ends of the bars move with a wide and fast movement, risking a collision with persons possibly present in the movement space. Though this situation is not a danger for injury or wounds, however practically it proved to be unfeasible, insofar the stroke causes fear or annoyance, particularly in presence of children whose head is at the same height as the bars.

Moreover the Applicant observed that such couple of horizontal bars, when they are rotated in a vertical plane (namely with axis of rotation directed as the transit direction), though solving partially the obstruction problems on the horizontal plane, however they keep showing the problem of the previous paragraph, namely the free ends move with a wide and fast movement which causes annoyance.

The Applicant also considered that the known movement system of physical barriers, due to their dimensioning, cause problems of obstruction and/or of complexity and/or limited functionality and/or energy consumption. Particularly the Applicant considers much advantageous that the access management system has a low power absorption, in order to reduce the energy consumption of the vehicle on which it is installed and thus reduce the pollution produced.

In order to overcome one or more of the aforementioned problems, the Applicant has designed an access management system to a vehicle for the public transport of persons, and a respective vehicle of public transport, according to the following aspects, in their various embodiments.

In a first aspect, the invention discloses an access management system according to claim 1.

In the following we make reference to the management system as in its installed configuration within the vehicle. In this context, the terms 'horizontal' and 'vertical' refer to a walking surface of the vehicle arranged as the geographical horizontal plane. However, this invention is meant to protect the management system itself, independently from its installation within a vehicle.

An "allowed free" passage area means that it is not occupied.

The term 'substantially', when referred to a given space direction (for example 'substantially parallel' or 'substantially vertical') comprises all directions which depart themselves up to +/-15° from the given direction.

Preferably in the open position said passage area allowed free by the management system has a minimum width along said transverse direction greater than or equal to 550 mm and less than or equal to 630 mm, more preferably less than or equal to 615 mm, even more preferably less than or equal to 600 mm.

Preferably in the obstruction position a length of said protruding portion of each bar along the transverse direction is less than or equal to 270 mm, more preferably less than or equal to 250 mm, even more preferably less than or equal to 240 mm, and greater than or equal to 160 mm, more preferably greater than or equal to 180 mm, even more preferably greater than or equal to 200 mm.

So the Applicant has noticed, against the common perception, that providing a free area having width not greater than 630 mm, eventually (and typically) restricting in such way the pre-existent width of the transit passageway at the management system, has no consequences such as to make the system itself unfeasible, once it is guaranteed that the free area with the system open has width at least 550 mm.

Either way, the passengers have sufficient free space for transit and the law requirements are fulfilled too.

The Applicant particularly highlights that according to the common perception the wider the free passage is the better it is, so the general tendency has always been to keep the two movement systems as far apart as possible (trying in particular to employ the whole free width of the passageway of the vehicle available before the installation of the system).

Overcoming this common perception, which is a real technical prejudice, the Applicant has instead considered, to his knowledge for the first time, that it is on the contrary advantageous bringing closer the two movement systems to a reduced distance, in order to let free a width less than or equal to 630 mm, even when this causes, as typically happens, a substantial restriction of the free width of the passageway available before the installation of the management system, such free width being typically 800-900 mm. The Applicant realized that, because he has brought near the movement systems, which are apart each other not more than 630 mm and not less than 550 mm, it is possible and advantageous to limit the transversal length of the protruding portion of the bars up to a maximum of 270 mm, preferably 250 mm, notwithstanding this causes that in the obstruction position there is a free distance between the two free ends of the bars.

In fact, on the one end the free area with open bars is sufficiently obstructed by the bars in the obstruction position in order to dissuade the passengers to transit through the management system without a valid travel ticket. To that extent, the minimum width of the bars, sat at 160 mm, guarantees a sufficient visibility of them.

On the other end, such limited length allows in the first place to reduce dramatically the range of the movement of the bars during their movement and to reduce dramatically the obstructed space in the open position, thereby solving the relative aforementioned problems, even when the bars are rotated on a horizontal plane. Moreover, the free ends of the bars sweep a short trajectory and with low speed, for a given angular speed, thus solving or at least mitigating the aforementioned problems of impact against the passengers and the associated discomfort, both with horizontal rotation and vertical rotation. Moreover, such dimensions allow to reduce the dimensioning of the movement systems, so reducing the overall encumbrance of the management system, or its production and/or installation and/or operation and/or maintenance cost or its energetic consumption.

The Applicant cares to highlight that the combination of the aforementioned structural and dimensional solutions, in their rationality, makes the relative management system suitable to an actual use on a vehicle for public transport of persons, where in absence of such solutions it is unfeasible, as proved by tests performed by the Applicant on transport vehicles in real operation conditions with real users.

The aforementioned system can also comprise one or more of the following preferred features.

Preferably a distance, along the respective main extension direction, between the axis of rotation and a respective proximal end of the protruding portion of the respective bar is less than or equal to 60 mm, more preferably less than or equal to 50 mm, even more preferably less than or equal to 40 mm. Typically such distance is at least 10 mm. Preferably a total length of each bar along the respective main extension direction is less than or equal to 300 mm, more preferably less than or equal to 280 mm. In this way advantageously the length of the bar from the rotational point to the free end and/or its total length is kept short, contributing in lightening the bar and in this way it is possible to simplify and reduce the dimension of the movement system.

Preferably a distance along the transverse direction between two free ends of the bars in obstruction position is greater than 90 mm, more preferably greater than or equal to 100mm, even more preferably greater than or equal to 110mm, and/or less than or equal to 230 mm, more preferably less than or equal to 200 mm, even more preferably less than or equal to 160 mm. In this way advantageously it is possible to shorten the bars to a length shorter than the length which would be necessary for occupying the total free width. In this way they are further enhanced the aforementioned effects of: reduced obstruction during the movement and in the open position, slower speed and shorter trajectory, cheaper cost and consumption of the movement system. The free unoccupied length, which is between 90 mm and 230 mm, is in any case not sufficient for allowing the passage of a person without a ticket avoiding in the meantime the rotation of the bars. Even in this case the Applicant considers he has overcome a technical prejudice, insofar in this commercial sector the focus is always to occupy as much as possible the width of the free area, allowing at most a few tens of millimetres between the two free ends.

Since the axes of rotation are horizontal and parallel to the transit direction, the bars rotate on a vertical plane orthogonal to the transit direction. According to the Applicant this feature works synergically with the aforementioned ones, insofar in the open position there is almost no encumbrance by the bars, avoiding or limiting, at the same time, the effect of abrupt falling from high of the ends of the bars which occurs with the bars of the prior art (for example the ones according to EP 2,278,554 A1), which in turn causes the aforementioned annoyance reactions by the users. Since in the open position the bars are located so that the main extension direction is substantially vertical, the encumbrance in the open position is minimal. In the open position, a direction along the main extension direction, from the axis of rotation to the free end may be facing down (in order for avoiding the impact with the children heads possibly present during the opening/closing movement) or facing up (in order for improving the visibility of the bars).

Preferably each bar comprises a hub portion arranged at the respective axis of rotation and an obstruction portion, which, at least for a substantial portion, in obstruction position occupies the aforementioned passage area, more preferably the bar is a hollow single body, even more preferably it is made of plastic. In this way the bars are light, structurally simple and cheap. It is observed that the obstruction portion not necessarily coincides with the aforementioned protruding portion of the bar, insofar for example a part of the hub portion may protrude from the movement system or a part of the obstruction portion may not protrude from the movement system.

Preferably the obstruction portion of the bar has a flat configuration (namely it is not cylindrical). More preferably a thickness along a direction orthogonal to a main extension plane of the obstruction portion is less than or equal to 50 mm and/or greater than or equal to 10 mm. In this way the obstruction at least in the direction orthogonal to the extension plane, and/or the weight of the bars are further reduced, this further decreases the requirements of the movement system which can be simplified and/or can be miniaturized and/or needs less power and less energy consumption.

Preferably each movement system comprises a rotational pin extending along the respective axis of rotation connectable to the bar to rotate it, and an electric motor having a motor shaft associated with said rotational pin to rotate it. Preferably said motor shaft has an extension perpendicular to said rotational pin, and the movement system comprises a gearmotor interposed between said motor shaft and said pin in order to transmit the rotation from the motor shaft to the pin, rotating its axis of rotation. In this way the encumbrance of the movement system is reduced.

Preferably the electric motor has a power less than or equal to 60 W, more preferably less than or equal to 50 W. In this way the energy consumption of the vehicle is reduced. Preferably the movement system comprises a clutch interposed between said rotational pin and said motor shaft, more preferably between said rotational pin and said gearmotor. Preferably said clutch is designed for transmitting torque up to a maximum of 5 Nm. In this way the possible excessive torques acting on the bar at its axis of rotation, over a predetermined threshold, are not transmitted to the gearmotor, in order to avoid any damage of the latter.

Preferably the movement system comprises a magnetic couple formed by an electromagnet and a ferromagnetic block (more preferably a permanent magnet), the magnetic couple being interposed between said rotational pin and said bar. In this way advantageously it is possible to decouple the motor and the bar, for example when there is an interruption of electric current (due to a fault or due to an intentional exclusion by the driver for an emergency) or when the bar undergoes a sharp hit which causes the decoupling of the magnetic couple.

Preferably the hub portion of the bar has a hollow cylindrical shape with a substantial axis of symmetry parallel to said rotational pin, and more preferably it houses inside itself a part of said rotational pin and said magnetic couple.

Preferably said substantial axis of symmetry is placed at a predetermined distance from said respective axis of rotation. In this way it is possible to place the axis of rotation nearer to the passage area, so managing, in the obstruction position, to protrude more the bars in the passage area (particularly to protrude a part of the hub portion), while maintaining, in the open position, the hub portion completely out of the passage area.

Preferably the movement system comprises a box-like body in which said electric motor and said gearmotor, and preferably said friction are housed rigidly, wherein said rotational pin emerges through a bore on the box-like body to engage the bar through a bore on the hub portion, said bar being rotationally attached to said box-like body.

Preferably the management system is designed such that said axes of rotation cannot be translationally moved. In this way advantageously the bars go from the obstruction position to the open position with a pure rotational movement, without translational components. In turn this simplifies and rationalizes the movement system, making the management system further practical and cheap. It is further observed that such solution is made actable by the reduced dimension of the bars.

In an embodiment the bars comprise at least a portion elastically deformable suitable to allow the aforementioned rotation around said further axis of rotation.

In an embodiment each movement system is designed to allow the rotation of the respective axis of rotation around said further axis of rotation, such as the bars can take said safety position. Preferably said further axis of rotation is (substantially) orthogonal to the main extension direction of the respective bar in the obstruction position.

The rotation of at least a portion of each bar around said further axis of rotation makes it possible to move (at least a portion of) the bars in the safety position in which they not obstruct the passage area or they obstruct it minimally, in order to guarantee the possibility to open the management system during particular situations.

Preferably, in the safety position, the management system leaves free at least one sub-portion of said passage area, said sub-portion having a minimum width along said direction greater than or equal to 550mm and less than or equal to said minimum width of said allowed free passage area. In this way even in the safety position there is a sufficient free space such as to allow the flow of the passengers.

Since said further axes of rotation are vertical, in the safety position the bars are orthogonal to the passage area and their rotation is particularly easy by manual force. Preferably said force is less than or equal to 60 N (assuming that this force is applied at an intermediate point, along the main extension direction, of the protruding portion of the bar). In this way during emergency situations the bars are easily rotatable.

Preferably said box-like body is envisaged to rotate around said further axis of rotation. In this way the rotation to the safety position is realized in a simple and cheap way.

Preferably each movement system comprises two brackets vertically overlapped with each other at a predetermined distance, the box-like body being interposed between the two brackets, a resilient element interposed between one of the two brackets and the box-like body, and a displacement system interposed between one of the two brackets and the box-like body, the displacement system being adapted, upon rotation of the box-like body around the further axis of rotation, to move the box-like body overcoming an elastic force of the resilient member. In this way, when the box-like body is rotated by a manual force, it is generated an elastic energy within the elastic element which, once the force is finished, tends to recover the box-like body in the rest position of the elastic element (independently from the position of the bars around their axis of rotation).

Preferably the displacement system comprises a slider integral with one among the box-like body and the respective bracket and a guide integral with the other among the box-like body and the respective bracket, such as following the rotation of the box-like body said slider flow along the guide causing a movement of the box-like body with respect to said brackets.

Preferably said management system has vertical plane of symmetry orthogonal to the passage area. In this way the production, the installation, the operation and/or the maintenance is/are simplified.

Preferably the movement systems (more preferably said brackets) are (envisaged to be) installed respectively on a couple of elements, more preferably on a couple of stanchions substantially vertical, arranged on opposite sides of the passageway.

Preferably the management system comprises an electronic unit for the operation and the control of the system, attachable to a validation machine of travel tickets in order to receive from the validation machine a validation signal of a travel ticket, said validation signal being able to represent at least a first state corresponding with a validity of the travel ticket, said electronic unit being connected with said movement systems in order to send a command signal, the electronic unit being configured for commanding said movement systems through said command signal and for arrange the bars in one among the two positions as function of said validation signal.

Preferably the management system comprises at least a light and/or acoustic indicator (more preferably a couple of light and/or acoustic indicators) envisaged for being connected with said electronic unit in order for receiving from it a further command signal, wherein each indicator is designed to take at least two configurations, respectively of an authorized and an unauthorized transit, the electronic unit being programmed for operating, through said further command signal, said light and/or acoustic indicator selectively in one of the two configurations of said validation signal.

Preferably each light and/or acoustic indicator comprises a light semaphore which is configurable with at least two colours corresponding with the aforementioned configurations of authorized and unauthorized transit.

Preferably the management system comprises a detection system located near the passage area for detecting the presence of a user, and connected with said electronic unit in order to send it a signal of presence of the user, said signal of presence can represent at least a first state corresponding with a presence of said user in the sensibility field of the detection system and the electronic unit being programmed for generating said command signal as a function of said signal of presence too.

Preferably the detection system comprises at least a first and a second photoelectric cell located at a predetermined distance along the transit direction and astride of the passage area, outside of the obstruction of the bars in their two positions, each photoelectric cell being envisaged for generating a respective signal of presence of the user in its sensibility field. In this way advantageously, the detection system is able to detect the transit through the passage area by a user and/or a possible stay of a user proximally in front or behind the passage area.

Preferably in the open position said minimum width along said transversal direction of said passage area is (substantially) less than a free width of said passageway (at the management system position) available before an installation of the management system, wherein preferably said free width of said passageway is greater than or equal to 800mm and/or less than or equal to 900mm.

In a further aspect the invention discloses a vehicle for the public transport of persons, the vehicle comprising the management system according to the present invention in its various embodiments.

In a further aspect the invention discloses a method for the management of access to a vehicle for the public transport of persons, the method comprising:
- providing a management system in accordance to the present invention in its various embodiments;
- installing said management system by installing said movement systems respectively on a couple of elements, preferably a couple of stanchions substantially vertical, arranged at opposite sides of the passageway;
- operating said management system in order to manage the transit of the persons through said management system.

Preferably installing said management system comprises (substantially) narrowing a pre-existent free width of the passageway along said transversal direction at the management system position, wherein preferably said free width of said passageway (for example coinciding with a distance between said two elements along said transversal direction) is greater than or equal to 800mm and/or less than or equal to 900mm.

The present invention will be presented in further detail by exemplar embodiments with reference to the attached figures, in which:
- figures 1A-1C show schematically and partially an access management system according to a first embodiment of the present invention with the bars respectively in the obstruction, open and safety position;
- figures 2A-2C show schematically and partially an access management system according to a second embodiment of the present invention with the bars respectively in the obstruction, open and safety position;
- figures 3A-3C show schematically and partially an access management system, not forming part of the present invention, with the bars respectively in the obstruction, open and safety position;
- figure 4 shows a frontal view of the system of figure 1B;
- figure 5 shows a perspective schematic and partially sectioned view of a part of the management system according to the present invention;
- figure 6 shows an orthogonal schematic and partially sectioned view of the part of the management system of figure 5;
- figure 7 show a further schematic and partially sectioned view of the part of management system of figure 5, with some parts in transparency.

With reference number 1 it is indicated an access management system to a vehicle for public transport of passengers according to the present invention. The same reference number is here used for elements which mutually correspond in possible different embodiments.

The vehicle is not described in detail because it is for example of a known type.

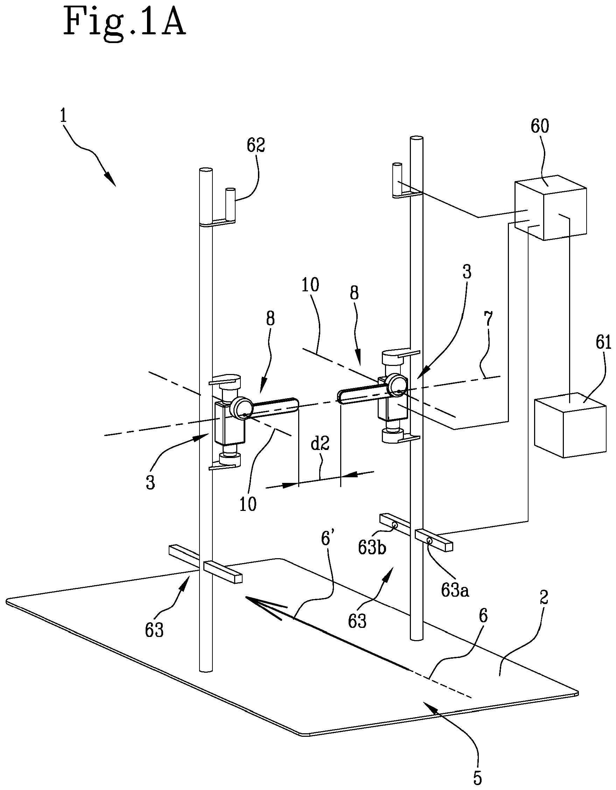

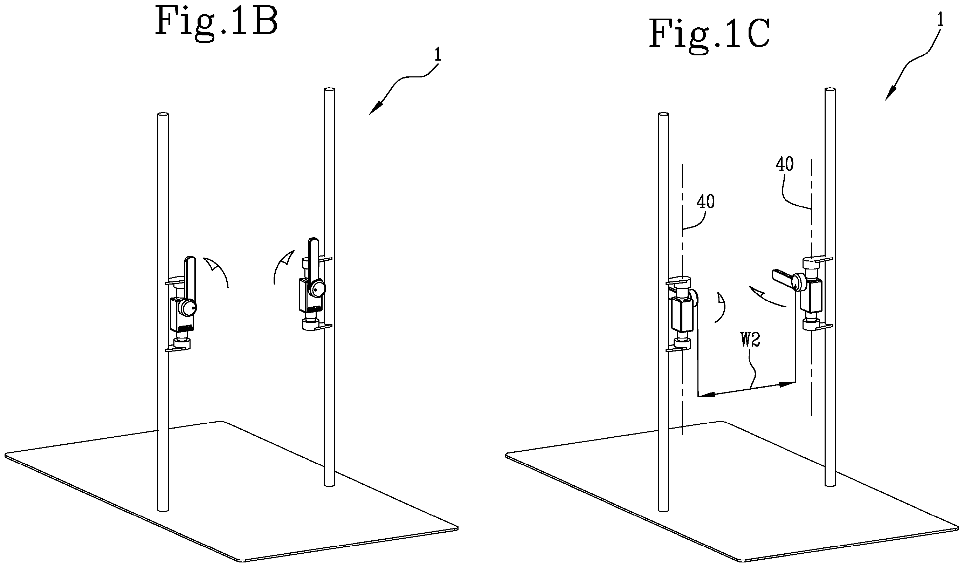

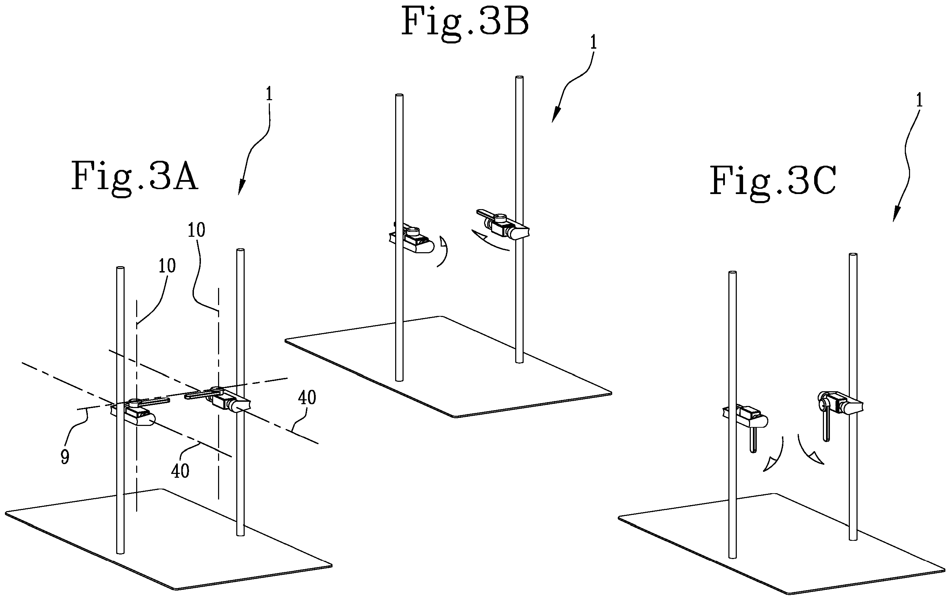

In figures 1-4 a walking plane 2 is exemplarily shown which defines a horizontal plane. The management system 1 comprises a pair of movement systems 3 installed respectively on opposite sides of a passageway 5 of the vehicle.

It is defined an horizontal transit direction 6 orthogonal with a passage area, an orientation of transit of passengers (according to arrow 6') and a transversal direction 7, horizontal and orthogonal with the transit direction.

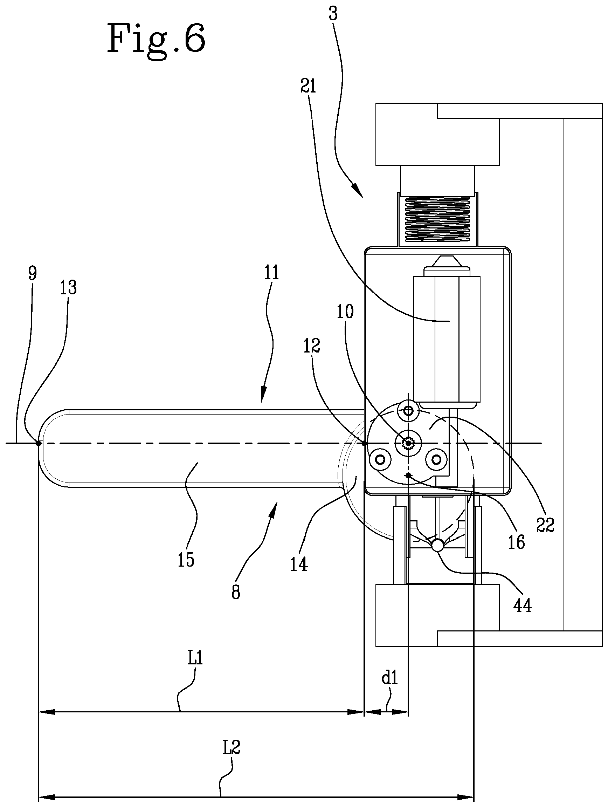

The management system comprises a pair of bars 8 associated respectively with the pair of movement systems, each bar having a respective main extension direction 9 (see figure 6). Preferably the bars are arranged such as the distance of their bottom end edge from the walking plane is greater than or about equal to 100 cm and less than or equal to 120 cm.

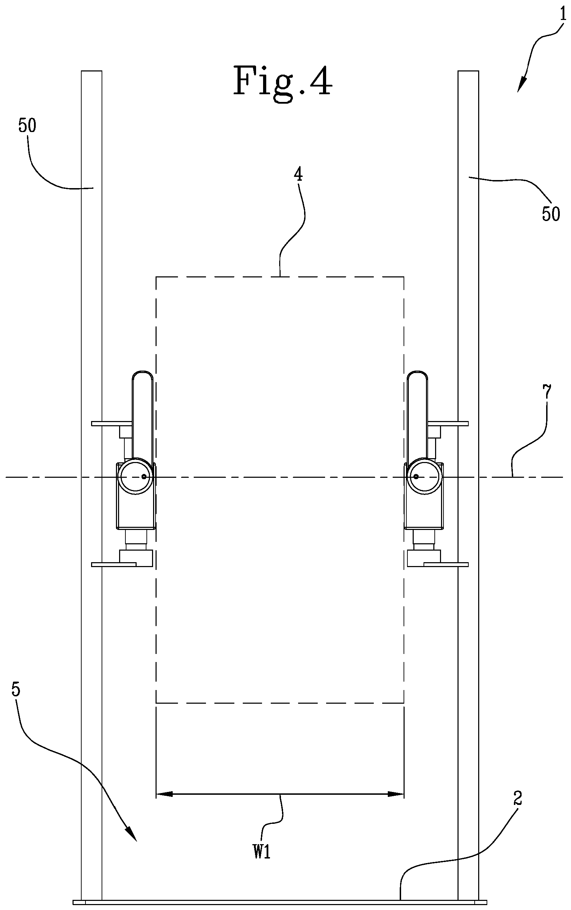

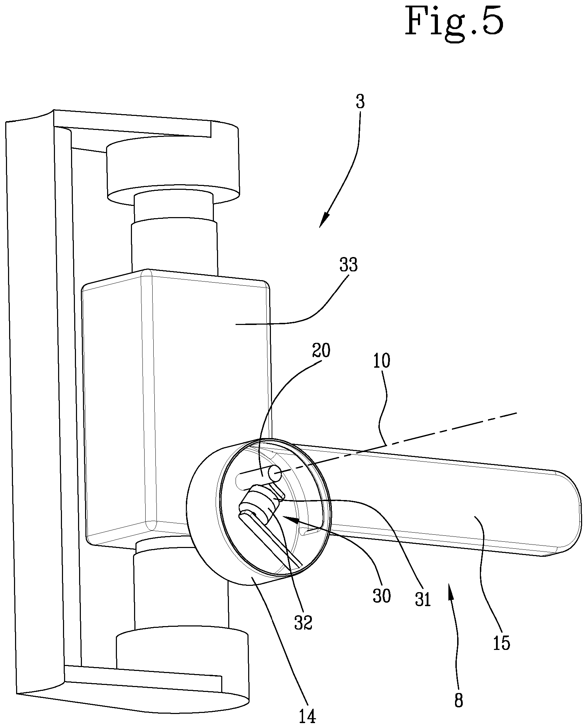

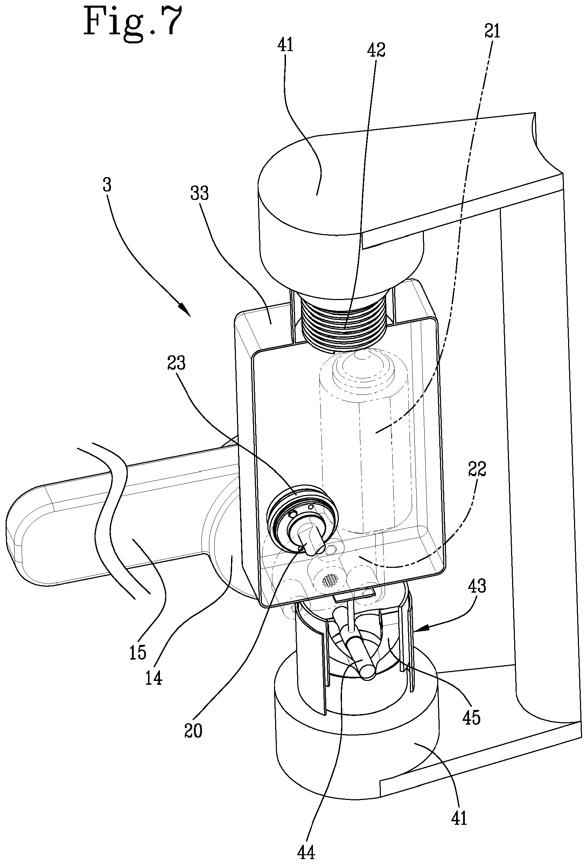

Each movement system 3 is configured for rotating the respective bar 8 around a respective axis of rotation 10 between an open position (exemplarily shown in figures 1B, 2B and 4) in which a passage area 4 is kept free (namely not obstructed) by the management system 1 and a position of obstruction (exemplarily shown in figures 1A, 2A and 5-7), in which a portion 11 of the bar protruding from the movement system is within the passage area 4 with a main extension direction arranged preferably along the transversal direction. In figure 4 is exemplarily shown the passage area 4 having development between the two movement systems on a plane orthogonal with the transit direction 6 and with a height at least of 80-100cm. In figure 6 it is exemplarily shown the protruding portion 11 of bar corresponding to the portion of the bar which is within the passage area and comprised between an end 12 proximal to the axis of rotation 10 and a free end 13 distal to the axis of rotation.

Exemplarily in the open position the passage area kept free by the management system has minimal free width W1 along the transversal direction equal to 570mm (fig. 4).

Exemplarily, a length L1 along the respective main extension direction of the protruding portion 11 of each bar is equal to 220 mm.

Exemplarily a distance d1, along the respective main extension direction, between the axis of rotation 10 and the respective proximal end 12 of the protruding portion of the respective bar is equal to 30 mm and a total length L2 of each bar along the respective main extension direction is equal to 290 mm.

Exemplarily the distance d2 along the transversal direction 7 between the two free ends 13 of the bars in the obstruction position is equal to 130 mm.

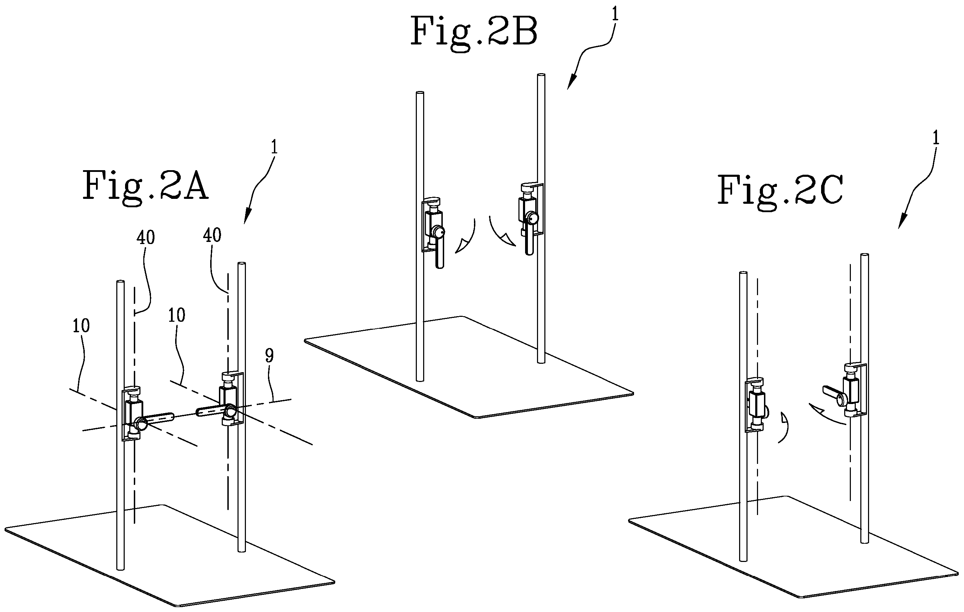

As exemplarily shown in figures 1A-1B and 2A-2B, the axes of rotation 10 are horizontal and parallel with the transit direction. In this way the bars rotate on a vertical plane orthogonal with the transit direction, or in other terms within the passage area 4.

In the open position (fig. 1B, 2B and 4) the main extension direction of the bars is vertical, and an orientation along the main extension direction from the axis of rotation towards the free end can be downward (fig. 2B) or upward (fig. 1B and 4).

Preferably each bar is a unique hollow body, for example made of plastic material, comprising a hub portion 14, arranged at the respective axis of rotation 10, and a obstruction portion 15 which, at least for a substantial part, in the obstruction position obstruct the aforementioned passage area 4. It is observed that in the shown example the obstruction portion 15 is not coincident with the aforementioned protruding portion 11 of the bar, insofar (see fig. 6) part of the hub portion 14 protrude from the movement system and further a minimal part of the obstruction portion 15 not protrude from the movement system.

Exemplarily an obstruction portion 15 of the bar has a flat shape having a thickness along the direction orthogonal with the main extension plane of the obstruction portion (namely the laying plane of the figure 6) equal to 20 mm.

Preferably each movement system 3 comprises a rotational pin 20 having extension along the respective axis of rotation 10 and associable with the bar in order to rotate it, and an electric motor 21 having a motor shaft (not visible) coupled with the rotational pin in order to rotate it. Preferably the motor shaft has an extension orthogonal with the rotational pin 20 and the movement system further comprises a gearmotor 22 interposed between the motor shaft and the pin 20, in order to transmit the rotation of the motor shaft to the pin, so rotating its axis of rotation to 90°.

Exemplarily the electric motor is suitable for being powered at 12V and drain a power of 35W.

Preferably the movement system 3 comprises a clutch 23 interposed between the rotational pin 20 and the gearmotor 22, the clutch being exemplarily suitable for transferring torque up to a maximum of 5 Nm.

Preferably the movement system 3 comprises a magnetic couple 30 formed by an electromagnet 31 and a ferromagnetic block 32 and interposed between the rotational pin 20 and the bar. In the example shown the electromagnet 31 is fixed to the pin 20 and the ferromagnetic block 32 is fixed with the bar 8, however their position can be inverted.

Preferably the hub portion 14 of the bar is hollow cylindrical shaped with substantial axis of symmetry 16 parallel with the rotational pin 20, and it houses inside a part of the rotational pin 20 and possibly the magnetic couple 30.

Exemplarily the substantial axis of symmetry 16 is located at a predetermined distance (for example 40 mm) from the respective axis of rotation 10.

Preferably the movement system 3 comprises a box-like body 33 within which the electric motor, the gearmotor, and preferably the clutch are housed. Preferably the rotational pin 20 protrudes through a hole on the box-like body to engage the bar through a hole on the hub portion 14, so that the bar is rotationally fixed to the box-like body.

Preferably the management system 1 is configured such as the axes of rotation 10 cannot translate.

Preferably the management system is structured in order to allow the rotation of at least a portion of the respective bar around a further axis of rotation 40 orthogonal with the axis of rotation 10, so that the bars can assume a safety position different from the open position.

In an embodiment (not shown) the bars comprise at least an elastic deformable portion suitable for allowing the aforementioned rotation around the further axis of rotation. For example the bars or at least a portion of them (e.g. the protruding portion) can be made of an elastically flexible material, such as when they are pushed applying an torque not around the axis of rotation 10, they flex allowing free at least a portion of the passage area 4, returning to their undeformed state once the pushing is over. Otherwise an elastic joint can be interposed between the movement system and the bar or along the bar, in order to allow at least the aforementioned elastic flexion/rotation.

In an embodiment, as those exemplarily shown, each movement system 3 is suitable for allowing the rotation of the respective axis of rotation 10 around said further axis of rotation 40 orthogonal with the axis of rotation 10 and preferably orthogonal with said transversal direction, so as the bars can assume a safety position (exemplarily shown in figure 1C and 2C) different than the open position. In the shown examples in the safety position the management system allows free a sub portion of the passage area which has a minimal width W2 along the transversal direction equal to 550 mm. However the present invention relates also with the situation (not shown) in which the movement systems are structured such as also in the safety position the management system allows free the entire passage area 4.

Preferably the box-like body 33 is suitable to rotate around the further axis of rotation 40. Preferably each movement system 3 comprises two brackets 41 vertically overlapped at a predetermined distance, the box-like body being interposed between the two brackets, an elastic element 42 (for example a spring) interposed between one of the two brackets and the box-like body 33, and a displacement system 43 interposed between one of the two brackets and the box-like body. Preferably the displacement system comprises a slider 44 integral with the box-like body and a guide 45 integral with the respective bracket, such as following the rotation of the box-like body around the further axis of rotation, the slider sliding along the guide causes a displacement (for example vertical) of the box-like body with respect to the brackets, insofar the displacement system, following the rotation of the box-like body around the further axis of rotation, moves the box-like body overcoming the elastic force of the elastic element. Preferably the guide is symmetric in order to allow the rotation of the box-like body in both rotation directions.

It is observed that in the shown example the elastic element and the displacement system are at opposite sides of the box-like body, however (not shown) they can also be located both at the same side of the box-like body. Moreover the elastic element in the shown example operates in compression, however (not shown) it can operate also in extension or torsion. Furthermore in the shown example the slider 44 is interposed between the guide and the box-like body and thrust the box-like body against the elastic element, however (not shown) the slider can also be past the guide with respect to the box-like body and act upon it by traction. Moreover in an embodiment (not shown) the guide can be integral with the box-like body and the slider integral with the respective bracket. Preferably the movement systems 3 (particularly the brackets 41) are installed respectively on a couple of elements 50, for example a couple of stems 50 substantially vertical arranged at opposite sides of the passageway.

Preferably the management system 1 comprises an electronic unit 60 for the operation and the control of the system, attachable with a travel ticket validation machine 61 in order to receive from the validation machine a validation signal of a travel ticket, said validation signal assuming at least a first state corresponding to a validity of the travel ticket, the electronic unit being connected to the movement systems 3 in order to send a command signal and being configured for commanding the movement systems by the command signal and for arrange the bars in one of the two positions as function of the validation signal.

Preferably the management system 1 comprises a couple of light and/or acoustic indicators 62 connected with the electronic unit 60 for receiving from it a further command signal, the indicators being suitable for assuming at least two configurations, respectively of authorized and unauthorized transit the electronic unit being configured for operate, through the further command signal, the light and/or acoustic indicators selectively in one of the two configurations as function of the validation signal.

Preferably each light and/or acoustic indicator 62 comprises a semaphore configurable with at least two colours corresponding with the configuration of authorized (e.g. green colour) and unauthorized (e.g. red colour) transit, more preferably configurable with a third colour (e.g. turned off or steady red colour) corresponding with a third configuration of the system closed and without a validation. In the shown example in figure 1A the two semaphores 62 are installed on respective stems 50 over the movement systems 3, however (not shown) they can be installed (alternatively or additionally) in any other place, for example at the movement system or, more preferably, integral with the bars. For example the semaphores can be housed inside the hollow body of the bars, the latter being made of a translucent or transparent material. Moreover alternatively or additionally to the light semaphores can be provided an acoustic indicator.

Preferably the management system 1 comprises a detection system 63 comprising at least a first 63a and a second 63b photoelectric cell located at a predetermined distance along the transit direction 6 and across the passage area 3, outside the obstruction of the bars in the two positions, each photoelectric cell being suitable for generating a respective presence signal of the user in the sensibility field of the photoelectric cell.

It is observed that the electronic unit 60, the validation machine 61, the light and/or acoustic indicators 62 and the detection system 63 are schematically shown only in figure 1A and with respective connections only partially shown.

Preferably the management system 1 comprises a sensor (not shown) coupled with each movement system in order to detect a possible movement of the bars around the respective axis of rotation and/or around the further axis of rotation.

In use the management system 1 can operate as follows.

During normal operation, when the system is idle, the bars are in the obstruction position and the possible light indicator in a neutral configuration (for example turned off or steady red light).

When a user/passenger which transits along the passageway 5 approach the passage area 4, he receives from the management system in the obstruction position a clear dissuasion signal to pass through the passage area without validating the travel ticket beforehand.

When the user validates the travel ticket in the validation machine 61, the latter sends to the electronic unit 60 the validation signal in the validity state. So the electronic unit sends the command signal to the movement systems in order to move the bars 8 in the open position. Possibly the electronic unit sends the further command signal to the light and/or acoustic indicators in order to set them in the authorized transit configuration (e.g. green light). When the detection system 63 detects the complete transit of the user through the passage area, the electronic unit sends the command signal in order to move the bars in the obstruction position again. If the user keeps staying near the passage area, its presence is detected by one or both photoelectric cells, and the electronic unit keeps the bars open until the complete transit of the user, in order for avoiding collisions of the bars with the user.

Either way, if the following user validates the ticket before the bars have come back in the obstruction position, the electronic unit keeps the bars in the open position until said following user transited the passage area.

Expired a predetermined time interval from the travel ticket validation without a detection of a user transit by the detection system 63, the electronic unit bring back the bars in the obstruction position.

If the detection system detects a transit in excess and/or the sensor detects a movement of the bars which does not match with a travel ticket validation, the electronic unit sends the further command signal in order to arrange the light and/or acoustic indicators in the unauthorized transit configuration (e.g. red light, for example blinking, and/or acoustic signal, for example alarm, of violation). The clutch 23 avoids that a too strong attempt of manual rotation of the bar damages the gearmotor.

In emergency situation, the bars are easily placed in the safety position with a simple horizontal manual thrust (as shown in figure 1C and 2C), in both rotation directions.

Possibly, the magnetic couple disengages the motor and the bar, for example a voluntary exclusion by the driver due to an emergency or if the bar suffers a violent thrust. In this situation in order to return to the normal operation condition a simple rotation of the motor shaft engages again the magnetic couple.

## Claims

1. Access management system (1) for a vehicle for the public transport of persons, the management system comprising:
- a pair of movement systems (3) to be mounted respectively on opposite sides of a passageway (5) of the vehicle, the passageway having a transit direction (6) and a transverse direction (7), horizontal and perpendicular to the transit direction;
- a pair of bars (8) respectively associated to the pair of movement systems, each bar having a main extension direction (9),
wherein each movement system (3) is configured to rotate the respective bar (8) around a respective axis of rotation (10) between an open position, wherein a passage area (4) extending between the two movement systems (3) on a plane orthogonal to said transit direction (6) is allowed free by the management system (1), and an obstruction position, wherein a protruding portion (11) of the bar is in the passage area (4), with the main extension direction (9) arranged substantially along the transverse direction (7), wherein said axes of rotation (10) are horizontal and parallel to the transit direction (6), wherein in the open position the bars are located so that the main extension direction (9) is substantially vertical,
**characterized in that** the management system is designed to allow the rotation of at least a portion of each bar (8) around a further axis of rotation (40) substantially orthogonal to said axis of rotation (10), such that the bars may take a safety position different from the open position, wherein said further axes of rotation (40) are vertical and wherein said rotation around the further axis of rotation (40) is due to a manual force horizontally applied on the bars.

2. Management system according to claim 1, wherein a distance (d1) along the respective main extension direction (9), between the rotational axis (10) and a respective proximal end (12) of the protruding portion (11) of the respective bar is less than or equal to 60 mm, and wherein a total length (L2) of each bar along the respective main extension direction (9) is less than or equal to 300 mm, wherein a distance (d2) along the transverse direction (7) between two free ends (13) of the bars in obstruction position is greater than 90 mm, and/or less than or equal to 230 mm.

3. Management system according to claim 1 or 2, wherein in the open position a direction along the main extension direction (7), from the axis of rotation (10) to a free end (13) of the respective bar, is facing down.

4. Management system according to any one of the preceding claims, wherein each bar (8) comprises a hub portion (14) arranged at the respective axis of rotation (10) and an obstruction portion (15), which, at least for a substantial portion, in obstruction position occupies the above passage area (4).

5. Management system according to any one of the preceding claims, wherein each movement system (3) comprises a rotational pin (20) extending along the respective axis of rotation (10) and connectable to the bar (8) to rotate it, and an electric motor (21) having a motor shaft associated with said rotational pin to rotate it.

6. Management system according to claim 5, wherein said motor shaft has an extension perpendicular to said rotational pin, and the movement system comprises a gearmotor (22) interposed between said motor shaft and said pin, in order to transmit the rotation from the motor shaft to the pin, rotating its axis of rotation,
and wherein the movement system (3) comprises a box-like body (33) in which said electric motor (21) and said gearmotor (22)are housed rigidly, wherein said rotational pin (20) emerges through a bore on the box-like body to engage the bar (8) through a bore on the hub portion (14), said bar (8) being rotationally attached to said box-like body (33).

7. Management system according to claim 5 or 6, wherein the movement system (3) comprises a clutch (23) interposed between said rotational pin (20) and said motor shaft.

8. Management system according to any one of the preceding claims, wherein the management system is designed such that said axes of rotation (10) cannot be translationally moved.

9. Management system according to claim 6, wherein said box-like body (33) is envisaged to rotate around said further axis of rotation (40).

10. Management system according to claim 6 or 9, wherein each movement system (3) comprises:
- two brackets (41) vertically overlapped with each other at a predetermined distance, the box-like body (33) being interposed between the two brackets,
- a resilient element (42) interposed between one of the two brackets and the box-like body, and
- a displacement system (43) interposed between one of the two brackets and the box-like body, the displacement system (43) being adapted, upon rotation of the box-like body (33) around the further axis of rotation (40), to move the box-like body (33) overcoming an elastic force of the resilient member.

11. Management system according to any one of the preceding claims, wherein an intensity of said manual force is less than or equal to 60 N.

12. Management system according to claim 10, wherein the displacement system (43) comprises a slider integral with one among the box-like body (33) and the respective bracket (41) and a guide (45) integral with the other among the box-like body (33) and the respective bracket (41), such as following the rotation of the box-like body (33) said slider flow along the guide causing a movement of the box-like body (33) with respect to said brackets (41).

13. Management system according to any one of the preceding claims, wherein in the open position said passage area (4) allowed free by the management system has a minimum width (W1) along said transverse direction of greater than or equal to 550 mm and less than or equal to 630 mm, preferably less than or equal to 600 mm,
wherein in the obstruction position a length (L1) of said protruding portion (11) of each bar along the transverse direction (7) is less than or equal to 270 mm, preferably less than or equal to 240 mm, and greater than or equal to 160 mm, preferably greater than or equal to 200 mm.

14. Vehicle for the public transport of persons, the vehicle comprising the management system (1) according to any one of the preceding claims, wherein said movement systems (3) are mounted respectively on said opposite sides of the passageway (5).

## Patentansprüche

1. Zugangsmanagementsystem (1) für ein Fahrzeug für den öffentlichen Personenverkehr, wobei das Managementsystem Folgendes umfasst:
- ein Paar Bewegungssysteme (3), die jeweils an entgegengesetzten Seiten eines Durchgangswegs (5) des Fahrzeugs zu montieren sind, wobei der Durchgangsweg eine Durchgangsrichtung (6) und eine Querrichtung (7), die horizontal und senkrecht zur Durchgangsrichtung verläuft, aufweist;
- ein Paar Stangen (8), die jeweils mit dem Paar von Bewegungssystemen assoziiert sind, wobei eine jede Stange eine Hauptausdehnungsrichtung (9) aufweist,
wobei ein jedes Bewegungssystem (3) ausgelegt ist, um die jeweilige Stange (8) rund um eine jeweilige Rotationsachse (10) zwischen einer offenen Position, in der ein Durchgangsbereich (4), der sich zwischen den zwei Bewegungssystemen (3) auf einer Ebene erstreckt, die rechtwinkelig zur Durchgangsrichtung (6) angeordnet ist, vom Managementsystem (1) freigegeben wird, und einer Hemmposition, in der sich ein hervorstehender Abschnitt (11) der Stange im Durchgangsbereich (4) befindet, zu drehen, wobei die Hauptausdehnungsrichtung (9) im Wesentlichen entlang der Querrichtung (7) angeordnet ist, wobei die Rotationsachsen (10) horizontal und parallel zur Durchgangsrichtung (6) verlaufen, wobei die Stangen in der offenen Position so angeordnet sind, dass die Hauptausdehnungsrichtung (9) im Wesentlichen vertikal verläuft,
**dadurch gekennzeichnet, dass** das Managementsystem ausgestaltet ist, um die Drehung von mindestens einem Abschnitt einer jeden Stange (8) rund um eine weitere Rotationsachse (40) zu erlauben, die im Wesentlichen rechtwinkelig zur Rotationsachse (10) verläuft, sodass die Stangen eine Sicherheitsposition einnehmen können, die sich von der offenen Position unterscheidet, wobei die weiteren Rotationsachsen (40) vertikal sind und wobei die Drehung rund um die weitere Rotationsachse (40) auf eine manuelle Kraft zurückzuführen ist, die horizontal auf die Stangen einwirkt.

2. Managementsystem nach Anspruch 1, wobei ein Abstand (d1) entlang der jeweiligen Hauptausdehnungsrichtung (9) zwischen der Rotationsachse (10) und einem jeweiligen proximalen Ende (12) des hervorstehenden Abschnitts (11) der jeweiligen Stange kleiner oder gleich 60 mm ist und wobei eine Gesamtlänge (L2) einer jeden Stange entlang der jeweiligen Hauptausdehnungsrichtung (9) kleiner oder gleich 300 mm ist, wobei ein Abstand (d2) entlang der Querrichtung (7) zwischen zwei freien Enden (13) der Stangen in der Hemmposition größer als 90 mm und/oder kleiner oder gleich 230 mm ist.

3. Managementsystem nach Anspruch 1 oder 2, wobei eine Richtung entlang der Hauptausdehnungsrichtung (7) von der Rotationsachse (10) zu einem freien Ende (13) der jeweiligen Stange in der offenen Position nach unten gewandt ist.

4. Managementsystem nach einem der vorhergehenden Ansprüche, wobei eine jede Stange (8) einen Nabenabschnitt (14) umfasst, der an der jeweiligen Rotationsachse (10) angeordnet ist, und einen Hemmabschnitt (15), der in der Hemmposition mindestens um einen wesentlichen Abschnitt den oben genannten Durchgangsbereich (4) einnimmt.

5. Managementsystem nach einem der vorhergehenden Ansprüche, wobei ein jedes Bewegungssystem (3) einen rotatorischen Zapfen (20) umfasst, der sich entlang der jeweiligen Rotationsachse (10) erstreckt und mit der Stange (8) verbindbar ist, um diese zu drehen, und einen Elektromotor (21), aufweisend eine Motorwelle, die mit dem rotatorischen Zapfen assoziiert ist, um diesen zu drehen.

6. Managementsystem nach Anspruch 5, wobei die Motorwelle eine Ausdehnung aufweist, die senkrecht zum rotatorischen Zapfen verläuft, und das Bewegungssystem einen Getriebemotor (22) umfasst, der zwischen der Motorwelle und dem Zapfen eingesetzt ist, um die Drehung von der Motorwelle auf den Zapfen zu übertragen, indem seine Rotationsachse gedreht wird,
und wobei das Bewegungssystem (3) ein kastenähnliches Gehäuse (33) umfasst, in dem der Elektromotor (21) und der Getriebemotor (22) steif untergebracht sind, wobei der rotatorische Zapfen (20) durch eine Bohrung auf dem kastenähnlichen Gehäuse herausragt, um in die Stange (8) durch eine Bohrung auf dem Nabenabschnitt (14) einzugreifen, wobei die Stange (8) rotatorisch am kastenförmigen Gehäuse (33) angebracht ist.

7. Managementsystem nach Anspruch 5 oder 6, wobei das Bewegungssystem (3) eine Kupplung (23) umfasst, die zwischen dem rotatorischen Zapfen (20) und der Motorwelle eingesetzt ist.

8. Managementsystem nach einem der vorhergehenden Ansprüche, wobei das Managementsystem so ausgestaltet ist, dass die Rotationsachsen (10) translatorisch nicht bewegt werden können.

9. Managementsystem nach Anspruch 6, wobei das kastenähnliche Gehäuse (33) dazu bestimmt ist, sich um die weitere Rotationsachse (40) zu drehen.

10. Managementsystem nach Anspruch 6 oder 9, wobei ein jedes Bewegungssystem (3) Folgendes umfasst:
- zwei Bügel (41), die sich vertikal einander an einem vorgegebenen Abstand überlappen, wobei das kastenähnliche Gehäuse (33) zwischen den zwei Bügeln eingesetzt ist;
- ein rückfederndes Element (42), das zwischen einem der zwei Bügel und dem kastenähnlichen Gehäuse eingesetzt ist, und
- ein Verschiebungssystem (43), das zwischen einem der zwei Bügel und dem kastenähnlichen Gehäuse eingesetzt ist, wobei das Verschiebungssystem (43) ausgelegt ist, um das kastenähnliche Gehäuse (33) bei der Drehung des kastenähnlichen Gehäuses (33) rund um die weitere Rotationsachse (40) zu bewegen und eine elastische Kraft des rückfedernden Elements zu überwinden.

11. Managementsystem nach einem der vorhergehenden Ansprüche, wobei eine Intensität dieser manuellen Kraft kleiner oder gleich 60 N ist.

12. Managementsystem nach Anspruch 10, wobei das Verschiebungssystem (43) einen Schieber umfasst, der entweder mit dem kastenähnlichen Gehäuse (33) oder dem jeweiligen Bügel (41) fest verbunden ist, und eine Führung (45), die mit dem jeweils anderen Element, d. h. entweder dem kastenähnlichen Gehäuse (33) oder dem jeweiligen Bügel (41), fest verbunden ist, sodass der Schieber nach der Drehung des kastenähnlichen Gehäuses (33) entlang der Führung verfährt und eine Bewegung des kastenähnlichen Gehäuses (33) zu den Bügeln (41) herbeiführt.

13. Managementsystem nach einem der vorhergehenden Ansprüche, wobei der durch das Managementsystem freigegebene Durchgangsbereich (4) in der offenen Position eine Mindestbreite (W1) entlang der Querrichtung aufweist, die größer oder gleich 550 mm und kleiner oder gleich 630 mm ist, vorzugsweise kleiner oder gleich 600 mm,
wobei eine Länge (L1) des hervorstehenden Abschnitts (11) einer jeden Stange entlang der Querrichtung (7) in der Hemmposition kleiner oder gleich 270 mm ist, vorzugsweise kleiner oder gleich 240 mm, und größer oder gleich 160 mm, vorzugsweise größer oder gleich 200 mm.

14. Fahrzeug für den öffentlichen Personenverkehr, wobei das Fahrzeug das Managementsystem (1) nach einem der vorhergehenden Ansprüche umfasst, wobei die Managementsysteme (3) jeweils an entgegengesetzten Seiten des Durchgangswegs (5) montiert sind.

## Revendications

1. Système de gestion d'accès (1) pour un véhicule pour le transport public de personnes, le système de gestion comprenant :
- une paire de systèmes de mouvement (3) à monter respectivement sur les côtés opposés d'un passage (5) du véhicule, le passage ayant une direction de transit (6) et une direction transversale (7), horizontale et perpendiculaire à la direction de transit ;
- une paire de barres (8) respectivement associées à la paire de systèmes de mouvement, chaque barre ayant une direction d'extension principale (9), dans lequel chaque système de mouvement (3) est configuré pour faire tourner la barre respective (8) autour d'un axe de rotation respectif (10) entre une position ouverte, dans laquelle une zone de passage (4) s'étendant entre les deux systèmes de mouvement (3) sur un plan orthogonal à ladite direction de transit (6) est laissée libre par le système de gestion (1), et une position d'obstruction, dans laquelle une partie en saillie (11) de la barre se trouve dans la zone de passage (4), avec la direction d'extension principale (9) disposée sensiblement le long de la direction transversale (7), dans lequel lesdits axes de rotation (10) sont horizontaux et parallèles à la direction de transit (6), dans lequel, dans la position ouverte, les barres sont situées de telle sorte que la direction d'extension principale (9) est sensiblement verticale,
**caractérisé en ce que** le système de gestion est conçu pour permettre la rotation d'au moins une partie de chaque barre (8) autour d'un autre axe de rotation (40) sensiblement orthogonal audit axe de rotation (10), de sorte que les barres puissent prendre une position de sécurité différente de la position ouverte, dans lequel lesdits autres axes de rotation (40) sont verticaux et dans lequel ladite rotation autour de l'autre axe de rotation (40) est due à une force manuelle appliquée horizontalement sur les barres.

2. Système de gestion selon la revendication 1, dans lequel une distance (d1) le long de la direction d'extension principale respective (9), entre l'axe de rotation (10) et une extrémité proximale respective (12) de la partie en saillie (11) de la barre respective est inférieure ou égale à 60 mm, et dans lequel une longueur totale (L2) de chaque barre le long de la direction d'extension principale respective (9) est inférieure ou égale à 300 mm, dans lequel une distance (d2) le long de la direction transversale (7) entre deux extrémités libres (13) des barres en position d'obstruction est supérieure à 90 mm, et/ou inférieure ou égale à 230 mm.

3. Système de gestion selon la revendication 1 ou 2, dans lequel, dans la position ouverte, une direction le long de la direction d'extension principale (7), de l'axe de rotation (10) à une extrémité libre (13) de la barre respective, est orientée vers le bas.

4. Système de gestion selon l'une quelconque des revendications précédentes, dans lequel chaque barre (8) comprend une partie de moyeu (14) disposée au niveau de l'axe de rotation (10) respectif et une partie d'obstruction (15), qui, au moins pour une partie substantielle, en position d'obstruction occupe la zone de passage (4) ci-dessus.

5. Système de gestion selon l'une quelconque des revendications précédentes, dans lequel chaque système de mouvement (3) comprend une clavette rotative (20) s'étendant le long de l'axe de rotation respectif (10) et pouvant être reliée à la barre (8) pour la faire tourner, et un moteur électrique (21) ayant un arbre moteur associé à ladite clavette rotative pour la faire tourner.

6. Système de gestion selon la revendication 5, dans lequel ledit arbre moteur a une extension perpendiculaire à ladite clavette rotative, et le système de mouvement comprend un motoréducteur (22) interposé entre ledit arbre moteur et ladite clavette, afin de transmettre la rotation de l'arbre moteur à la clavette, en faisant tourner son axe de rotation,
et dans lequel le système de mouvement (3) comprend un corps en forme de boîte (33) dans lequel ledit moteur électrique (21) et ledit motoréducteur (22) sont logés de manière rigide, dans lequel ladite clavette rotative (20) émerge à travers un alésage sur le corps en forme de boîte pour engager la barre (8) à travers un alésage sur la partie de moyeu (14), ladite barre (8) étant fixée de manière rotative audit corps en forme de boîte (33).

7. Système de gestion selon la revendication 5 ou 6, dans lequel le système de mouvement (3) comprend un embrayage (23) interposé entre ladite clavette rotative (20) et ledit arbre moteur.

8. Système de gestion selon l'une quelconque des revendications précédentes, dans lequel le système de gestion est conçu de telle sorte que lesdits axes de rotation (10) ne peuvent pas être déplacés en translation.

9. Système de gestion selon la revendication 6, dans lequel ledit corps en forme de boîte (33) est prévu pour tourner autour dudit autre axe de rotation (40).

10. Système de gestion selon la revendication 6 ou 9, dans lequel chaque système de mouvement (3) comprend :
- deux supports (41) se recouvrant verticalement l'un l'autre à une distance prédéterminée, le corps en forme de boîte (33) étant interposé entre les deux supports,
- un élément résilient (42) interposé entre l'un des deux supports et le corps en forme de boîte, et
- un système de déplacement (43) interposé entre l'un des deux supports et le corps en forme de boîte, le système de déplacement (43) étant adapté, lors de la rotation du corps en forme de boîte (33) autour de l'autre axe de rotation (40), pour déplacer le corps en forme de boîte (33) en surmontant une force élastique de l'élément résilient.

11. Système de gestion selon l'une quelconque des revendications précédentes, dans lequel une intensité de ladite force manuelle est inférieure ou égale à 60 N.

12. Système de gestion selon la revendication 10, dans lequel le système de déplacement (43) comprend un curseur solidaire de l'un parmi le corps en forme de boîte (33) et le support respectif (41) et un guide (45) solidaire de l'autre parmi le corps en forme de boîte (33) et le support respectif (41), de sorte que suite à la rotation du corps en forme de boîte (33), ledit curseur coulisse le long du guide provoquant un mouvement du corps en forme de boîte (33) par rapport auxdits supports (41).

13. Système de gestion selon l'une quelconque des revendications précédentes, dans lequel, en position ouverte, ladite zone de passage (4) laissée libre par le système de gestion a une largeur minimale (W1) le long de ladite direction transversale, supérieure ou égale à 550 mm et inférieure ou égale à 630 mm, de préférence inférieure ou égale à 600 mm,
dans lequel, dans la position d'obstruction, une longueur (L1) de ladite partie en saillie (11) de chaque barre le long de la direction transversale (7) est inférieure ou égale à 270 mm, de préférence inférieure ou égale à 240 mm, et supérieure ou égale à 160 mm, de préférence supérieure ou égale à 200 mm.

14. Véhicule pour le transport public de personnes, le véhicule comprenant le système de gestion (1) selon l'une quelconque des revendications précédentes, dans lequel lesdits systèmes de mouvement (3) sont montés respectivement sur lesdits côtés opposés du passage (5).
